# EUROPEAN PATENT SPECIFICATION

(11) **EP 4 248 122 B1**
(45) Date of publication and mention of the grant of the patent: **07.01.2026**
(21) Application number: 21895852.8
(22) Date of filing: 15.11.2021
(51) Int. Cl.: F16N 29/00, F16N 31/00, A61L 31/14, C10M 171/00

(54) **SENSOR MONITORING SYSTEM WITH CLOUD BASED INTERFACE**
SENSORÜBERWACHUNGSSYSTEM MIT CLOUD-BASIERTER SCHNITTSTELLE
SYSTÈME DE SURVEILLANCE DE CAPTEUR À INTERFACE EN NUAGE

(30) Priority: 20.11.2020 US 202063116617 P; 07.10.2021 US 202117496135
(43) Date of publication of application: 27.09.2023
(73) Proprietor: Baker Hughes Holdings LLC, Houston, TX 77073 (US)
(72) Inventor: LUSTIG, James Michael, Houston, Texas 77073 (US); CHOW, Jon Wei, Houston, Texas 77073 (US); PARKES, Glen, Houston, Texas 77073 (US); GROVER, Christopher, Houston, Texas 77073 (US); MCFADDEN, Allen, Houston, Texas 77073 (US); COURTNEY, Doug, Houston, Texas 77073 (US); HUTCHINSON, Andrew Walter, Houston, Texas 77073 (US)
(74) Representative: Novagraaf Group
(86) International application number: PCT/US2021/072402
(87) International publication number: WO 2022/109534

(56) References cited:
- WO-A1-2020/038666
- WO-A1-2020/169874
- JP-A- 2007 002 809
- KR-A- 20090 023 801
- KR-A- 20090 023 801
- KR-A- 20090 063 513
- KR-A- 20090 063 513
- US-A1- 2014 019 068
- US-A1- 2015 198 578
- US-A1- 2018 231 518

## Description

### FIELD

The present invention relates generally to systems and methods of monitoring the properties of a lubricant.

### BACKGROUND

A traditional monitoring system can require regular intervals of sample collection and analysis to determine if the system is operating properly and efficiently. An example of a system which requires regular maintenance checks can be an oil or lubricant system of an engine or turbine. It would be essential to regularly take samples of oil from the engine at regular intervals and then analyze these samples to determine the quality of the oil within the engine. Previous types of preventative maintenance include time-based maintenance and lab-based condition monitoring.

Time-based maintenance can be inefficient since it requires regular intervals of maintenance in order to keep the engine running efficiently. However, the time-based maintenance does not account for a problem occurring in-between the regularly scheduled maintenance, such as a seal failure or oil contamination, which could destroy the engine internally before the time-based maintenance is performed. Additionally, lab-based condition monitoring requires regular samples to be taken and analyzed. In some instances, the results of the analysis may not come back for weeks, which could lead to an engine problem going unaddressed during that time. Also, samples are typically only collected on an infrequent basis (e.g., once every 3 months) and so only represent a snapshot in time. Even further, sample collection is prone to contamination and labeling errors, and lab analysis is also prone to human error in testing. Even if the correct analysis is performed on the samples and a report generated, lab-based condition testing relies on a person reviewing reports to spot the issues within the sample, which could be missed due to human error.

WO 2020/038666 A1 discloses a device including sensors for outputting a future state of a lubrication system.

### SUMMARY

In general, systems and methods for monitoring machines utilizing a lubricant are provided.

The present invention is defined in the accompanying claims. A system is provided and includes a sensor, a data hub, and a data processor. The sensor is arranged within a lubricant flow of a machine and configured to measure one or more properties of a lubricant within the machine. The data hub communicatively connected to the sensor and configured to collect and store the measured one or more properties of the lubricant from the sensor. The data processor communicatively connected to the data hub and configured to process the measured one or more properties of the lubricant from the sensor in order to determine if a maintenance threshold value has been reached.

In some embodiments, a plurality of sensors can be arranged within the lubricant flow of the machine and each configured to measure a different property of the lubricant within the machine. In other embodiments, the plurality of sensors can be configured to measure properties of the lubricant such as impedance, temperature, and/or viscosity of the lubricant and/or any particles within the lubricant.

In some embodiments, an accelerometer can be arranged on the machine and communicatively connected to the data hub, in which the accelerometer is configured to measure vibrations of the machine.

In some embodiments, the maintenance threshold value can be determined based on the measured properties of the lubricant and/or the measured vibrations of the machine. In certain embodiments, the maintenance threshold value can include determined properties of the lubricant such as Total Acid Number (TAN), Total Base Number (TBN), % water, % salt water, % glycol, % fuel, oxidation, nitration, sulfation, % soot, viscosity, density, dielectric constant, oil temperature, particle amount, particle size, oil flow rate, and/or vibration. Also, an alert can be trigged when at least one maintenance threshold value is reached.

In some embodiments, the data processor can be a cloud-based system. Additionally, the data hub can be communicatively connected to the central processing unit (CPU) of the machine and configured to collect and store operating data of the machine from the CPU. In certain embodiments, the operating data of the CPU can include fuel consumption, rotations per minute, and/or oil pressure of the machine.

In some embodiments, the data hub can be communicatively connected to a plurality of machines, with each machine including a plurality of sensors to measure one or more properties of a lubricant within each machine. In certain embodiments, the plurality of machines can be diesel engines.

In other embodiments, a method is provided and includes receiving a first set of data characterizing a first property of a lubricant within a machine from a first sensor arranged within the lubricant flow of the machine, transmitting the first set of data from the first sensor to a data hub communicatively connected to the first sensor, transmitting the first set of data from the data hub to a data processor, calculating a maintenance threshold value based on the first property of the lubricant from the first sensor, comparing the calculated maintenance threshold value to a maintenance threshold range, and outputting an alert when the calculated maintenance threshold value falls outside of the maintenance threshold range.

In some embodiments, the first set of data can include properties of the lubricant such as impedance, temperature, and/or viscosity of the lubricant and/or the presence of any particles within the lubricant.

In some embodiments, a second set of data characterizing a second property of a lubricant within a machine can be received from a second sensor arranged on the machine. In certain embodiments, the second set of data can include vibrations of the machine.

In some embodiments, the maintenance threshold value can be determined based on the first set of data and the second set of data. In certain embodiments, the maintenance threshold value can include determined properties of the lubricant such as Total Acid Number (TAN), Total Base Number (TBN), % water, % salt water, % glycol, % fuel, oxidation, nitration, sulfation, % soot, viscosity, density, dielectric constant, oil temperature, particle amount, particle size, oil flow rate, and/or vibration. In some embodiments, an alert can be sent to an interface when the maintenance threshold value is reached.

In some embodiments, the first sensor and the second sensor can continuously generate the first set of data and the second set of data.

In other embodiments, a non-transitory computer program products (e.g., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

### BRIEF DESCRIPTION OF THE DRAWINGS

A brief description of each drawing is provided to more sufficiently understand drawings used in the detailed description of the present disclosure.
FIG. 1 shows a schematic illustration of a sensor monitoring system according to one embodiment;
FIG. 2 is a flow diagram illustrating a method of operation of the sensor monitoring system of FIG. 1; and
FIG. 3 shows a schematic view of a computer system which can implement the method shown in FIG. 2.

It should be understood that the above-referenced drawings are not necessarily to scale, presenting a somewhat simplified representation of various features illustrative of the basic principles of the disclosure. The specific design features of the present disclosure, including, for example, specific dimensions, orientations, locations, and shapes, will be determined in part by the particular intended application and use environment.

### DETAILED DESCRIPTION

Machines that utilize lubricant (e.g., engines, turbines, etc.) can require regularly scheduled maintenance in order to prevent excessive wear and tear on the machine due to lubricant degradation. These machines can also be regularly tested by taking a sample of the lubricant at set time intervals, and then analyzing the samples for lubricant degradation. In both cases, this can lead to human error or a delay which can result in costly damage to the machine if lubricant degradation and/or contamination isn't readily identified as it occurs within the machine. Applications include, but are not limited to, diesel engines, turbines, gearboxes, hydraulics, compressor systems, and the like.

Accordingly, embodiments of the present disclosure provide improved systems and methods for monitoring sensors, such as lubricant sensors. As discussed in greater detail below, a system of the present disclosure can include one or more sensors installed on one or more machines. The sensors can be configured to measure one or more properties of a lubricant related to lubricant condition or quality. The system also includes a data hub device is communicatively connected to the sensors and used to collect sensor data, store sensor data, provide communication with local and/or remote computing devices (e.g., cloud based computing systems and/or storage devices) for data analysis and storage, and to provide a server for delivering local dashboard information to a user who operates the machines.

Also included in the present system is an architecture (e.g., a cloud-based architecture) used to provide an application programming interface (API) such that raw sensor data can be accessed for analysis. Analysis of the raw sensor data can include complex impedance data for analytics to be performed to determine other properties such as % water, % fuel, etc. within the lubricant. The cloud-based architecture can also provide secure access to a dashboard accessible by a client to view the measured parameters, provide a means of entry of information regarding system properties (e.g., oil changes, system make and model, lubricant type, and parameter thresholds for alerts and alarms), provide storage of raw sensor data as well as analysis outputs of sensor data, transmit analyzed data back to local data hubs, and/or receive data from remote machines via data hubs.

The dashboard of the system can be used to provide an interface with set user permissions based on role and provide multi-level fleet condition monitoring service. Examples of the levels can include, but are not limited to, Customer>Assets (e.g. vessels)>Systems (e.g. Engine)>Parameter (e.g. viscosity). The system (e.g., via the dashboard) can supply real-time trending data that is lubricant specific to the system being monitored, and can provide alert and alarm notifications based on customizable set points to the client.

Beneficially, embodiments of the system can reduce operating costs by reducing equipment down time resulting from unplanned maintenance and/or machine failure resulting from not spotting impeding maintenance issues early. As embodiments of the present disclosure evaluate the lubricant based on the observed condition of the lubricant in real-time, the operating life of the lubricant can be maximized, as compared to time-based lubricant maintenance which replaces the lubricant on a set schedule, regardless of the actual lubricant condition. Extending the lubricant life means lowering the frequency, and therefore cost, of oil changes. Additionally, the present system can increase machine efficiency since the system is able to extend useful the life of the machine by strategically determining the optimal time to replace the lubricant within a machine before a total rebuild of the machine is required.

Real-time lubricant condition monitoring also facilitates early identification of maintenance issues that occur despite proper maintenance allowing these issues to be addressed proactively, rather than after a failure occurs. These maintenance issues can include, but are not limited to oil changes, seal or valve maintenance, system rebuild and bearing maintenance.

Embodiments of the present system also enable improved fleet management with the ability to aggregate information from multiple systems and multiple assets into one platform. This system improves upon lab-based maintenance programs by providing real-time data and also eliminating the need for manual sample collection.

Using a plurality of sensors and data processing algorithms, embodiments of the present system are capable of providing data on a multitude of parameters that can be used to drive maintenance decisions. Examples of parameters suitable to inform maintenance decisions can include, but are not limited to, oil lifecycle, Total Acid Number (TAN), Total Base Number (TBN), % water, % salt water, % glycol, % fuel, oxidation, nitration, sulfation, % soot, viscosity, density, dielectric constant, oil temperature, particle amount, particle type (e.g., ferrous, non-ferrous), particle size, oil flow rate, vibration, and all available J-1939 engine data. The present system helps avoid maintenance problems within machines by tracking the various sensor parameter inputs and providing a user with alerts and/or alarms based on preset thresholds. In this manner, present system enables users to reduce the amount of awareness they need to have on all the various data sources and allows the users to focus on the parameters that are most critical to the health of their systems.

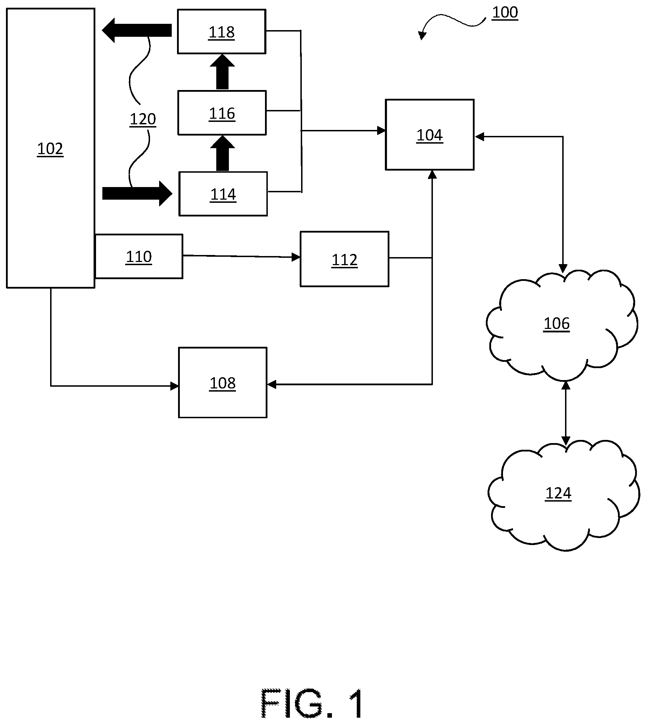

Referring now to FIG. 1, one exemplary embodiment of a system 100 for monitoring a machine utilizing lubricant is depicted. The system 100 includes a machine 102 which utilizes a lubricant. An example of the machine 102 can be a diesel engine or a turbine. However, it can be understood that embodiments of the system can be employed with any machine employing lubricant without limit.

The system 100 also includes a data hub 104 and a data processor 106. In an example embodiment, the data hub 104 is a computer including circuitry which can be used to collect, store and transmit data collected by the system 100. The data hub 104 can be located in close proximity to the machine 102, such as on the same vessel in the case of a maritime diesel engine, where the data hub 104 is physically or wirelessly communicatively connected to the machine 102. The data hub 104 is communicatively connected to the machine 102 via the central processing unit (CPU) 108 of the machine 102. The CPU 108 is communicatively connected to the sensors already present within the machine 102, such as rotations-per-minute sensors and oil pressure sensors. In an example embodiment, the data hub 104 can both receive and send signals to the CPU 108.

The data processor 106 is communicatively connected to the data hub 104. In an example embodiment, the data processor 106 is a cloud-based interface and offsite from the location of the machine 102. The data processor 106 can be a computer including circuitry that processes the data received from the data hub 104. The data hub 104 can include algorithms to process the received data, or can include saved profiles which can interpolate the received data in order to determine any maintenance threshold values which represent lubricant deterioration or part failure of the machine 102. In an example embodiment, the system 100 uses algorithms for specific types of lubricants which have been previously modeled in a laboratory setting. Since each lubricant has different viscosity, temperature, and impedance properties, the maintenance threshold values derived from these measured values can vary greatly between lubricants. If the correct type of model for a specific lubricant isn't used with the system 100, the maintenance threshold values would be incorrect and could result in lubricant changes and shutdowns without an issue being present in the machine 102. The interpretation of the sensor data will utilize information about the lubricant type to select the proper model to apply for presenting the right parameter information on the dashboard. For example, is the system 100 is informed that a 15W40 engine oil is being used as the lubricant in the machine 102, but then a user places 80W90 gear oil the machine 102 instead, the system 100 will not be able to give accurate data for % water, %fuel, % soot, % salt water, % glycol, oxidation, nitration, sulfation, TAN, TBN or viscosity. Other systems only view a change in the impedance value to indicate that there may be "something" wrong with the lubricant in a machine, without considering the type of lubricant within the machine 102. Due to the previously developed models and algorithms, the system 100 can quantify the indirect properties of the lubricant.

The data hub 104 can also serve as a centralized data storage and processing center so that a plurality of machines 102 can be monitored in different locations, such as the engines for individual ships within a fleet. As data is received from the data hub 104 about the operation of the system machine 102, the data can be processed and transmitted back to the data hub 104. In the event that a maintenance threshold value is reached or exceed, an alert can be sent from the data processor 106 to the data hub 104 so that the machine 102 can be fixed by a local user.

In an example embodiment, the data processor 106 can further include a secondary data processor 122. The secondary processor 122 can also be a cloud-based interface which receives data from the data hub 104 and the data processor 106. In this example embodiment, the data processor 106 may act as a data storage center, where the processing of the data occurs at the secondary data processor 122, and then is transmitted back to the data processor 106.

In order to receive data about the machine 102 from the data hub 104, data about the machine 102 is collected through various sensors. Each sensor is communicatively connected to the data hub 104 so that data can be received by the data hub 104 at regular time intervals. The sensors can include one or more accelerometers 110 arranged on the machine 102 that are configured to detect vibrations of the machine 102 while in operation. In an example embodiment, a plurality of accelerometers 110 can be arranged at various positions on the machine 102 in order to ensure any non-conforming vibrations are detected. The accelerometers 110 can be used to measure vibrations from the machine 102, such as a shaft oscillating at a greater degree due to a bearing beginning to fail.

The accelerometers 110 transmit measured data to the data hub 104 through an accelerometer consolidation hub 112. The accelerometer consolidation hub 112 can be used in configuration where multiple accelerometers 110 are used on a single machine 102, or when multiple machines 102 are being monitored by the system 100. An example of the accelerometer consolidation hub 112 is the vbOnline Pro manufactured by Bentley Nevada^{®}.

In addition to the accelerometer 110, sensors such as sensors 114, 116, and 118 can be arranged within the lubricant flow 120 of the machine 102. The sensor 114 is a particle sensor, the sensor 116 is a viscosity sensor, and the sensor 118 is a fluid property sensor. Additional sensors may also be used to detect properties of the lubricant within the machine 102.

In an embodiment, the particle sensor 114 can be arranged upstream of any lubricant filters which may be present in the lubrication flow 120 in order to receive an accurate measurement. The particle sensor 114 can be configured to measure, within the lubricant flow 120, the particle size (microns), the particle quantity (counts), the type of particle (e.g., ferrous, non-ferrous), and the particle velocity/lubricant flow rate (L/min).

In an embodiment, the viscosity sensor 116 can be configured to measure, within the lubricant flow 120, the viscosity of the lubricant (cP), the lubricant density (gm/cc), the lubricant dielectric constant (unitless), and the lubricant temperature (°C).

The fluid property sensor 118 can be configured to measure, within the lubricant flow 120, the impedance (Ω) and temperature (°C) of the lubricant.

As data value measurements are acquired by the sensors 114, 116, and 118, these data values are transmitted to the data hub 104 for storage, and then to the data processor 106 for processing. Based on all of the data, the system 100 can determine maintenance threshold values such as the water dilution (%), soot (%), glycol (%), fuel dilution (%), salt water dilution (%), Total Base Number (TBN) (mg KOH/g), Total Acid Number (TAN) (unitless), oxidation, nitration, and viscosity (cP), and a percent lubricant life cycle (%). The system can further compare the determined lubricant life cycle to a threshold. If the lubricant life cycle exceeds the threshold, the system 100 can further notify an operator that lubricant replacement is needed. In this manner, the system ensures that the lubricant operates to its optimal life cycle so that the lubricant is not changed too early, and also facilitates replacement of the lubricant so that it is not changed too late to reduce the risk of damage to the machine 102.

At least a portion of these measurements and data can be outputted to a local dashboard communicatively connected to the data hub 104, and/or to a centralized dashboard communicatively connected to the data processor 106. Using the dashboard, a user can observe the measurements of the system 100 in real-time to determine if the system is operating efficiently, or if a failure of the machine 102 is imminent.

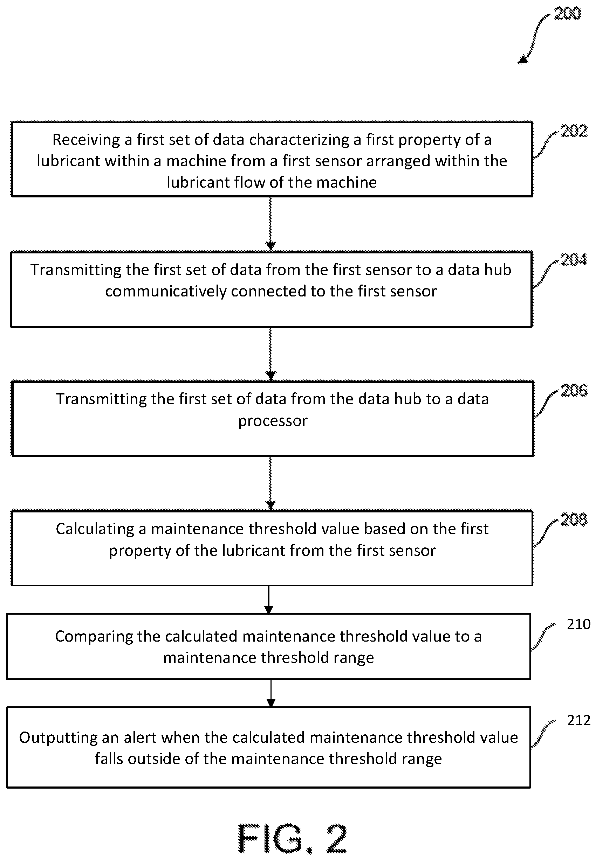

FIG. 2 is a flow diagram illustrating one exemplary embodiment of a method 200 sensor monitoring. The method 200 can be employed to monitor sensors that measure properties of a lubricant employed by a machine. The method 200 depicts the system 100 operating in a continuous data collection mode, where data is collected from the sensors at close intervals, for example, in the range of 30 seconds to 15 minute intervals.

As shown, the method 200 includes steps 202-208. However, it can be understood that alternative embodiments of the method can include greater or fewer steps than illustrated in FIG. 2 and that the steps can be performed in a different order than illustrated in FIG. 2, as necessary.

Step 202 includes receiving a first set of data characterizing a first property of a lubricant within the machine 102 from one or more first sensors arranged within the lubricant flow of the machine 102. As stated above, the first sensors can include one or more of sensors 114, 116, and 118 that are arranged within the lubricant flow 120 and are configured to measure certain properties of the lubricant during operation of the machine 102, such as impedance, viscosity, temperature, and/or the presence of particles.

Step 204 includes transmitting the first set of data from the first sensor(s) to the data hub 104 communicatively connected to the first sensor(s). After the data containing the lubricant properties is collected by the first sensor(s) (e.g., sensors 114, 116, and/or 118), the data set is transmitted to the data hub 104 for collection and storage. In an example embodiment, the data hub 104 is located locally to the machine 102.

Step 206 includes transmitting the first set of data from the data hub 104 to the data processor 106. As discussed above, the data processor 106 is configured to determine a maintenance threshold value from the first set of data. As the first set of data measured by the first sensor(s) is transmitted from the data hub 104 to the data processor 106, the data processor 106 processes the first set of data to determine a maintenance threshold value.

The maintenance threshold value can be the percent lubricant life cycle percentage, which determine the optimal life cycle of the lubricant within the machine and various other parameters such as Total Acid Number (TAN), Total Base Number (TBN), % water, % salt water, % glycol, % fuel, oxidation, nitration, sulfation, % soot, viscosity, density, dielectric constant, oil temperature, particle amount, particle size, oil flow rate, and/or vibration. Additionally, other values calculated from the first set of data can be used to set maintenance threshold values which can be used to interpret the raw data into useable information about the machine 102.

Step 208 includes calculating a maintenance threshold value based on the first property of the lubricant from the first sensor. The Total Acid Number (TAN), Total Base Number (TBN), % water, % salt water, % glycol, % fuel, oxidation, nitration, sulfation, % soot, viscosity, density, dielectric constant, oil temperature, particle amount, particle size, oil flow rate, vibration, and/or percent lubricant life cycle percentage can be affected by any data of the first set of data measured by the first sensor(s) (e.g., sensors 114, 116, and 118), such as an increase in impedance or viscosity. These changes in measured values can also be indicative of not just lubricant deterioration, but of a failing part. For example, if the calculated salt water dilution percentage is increasing steadily, it could indicate that a seal between the outside of a vessel and driveshaft is beginning to leak and could potentially fail in the near future. In an event where a maintenance threshold value is reached or exceed, an alarm can be sent to the centralized and local dashboards to inform a user of the potential component failure or excessive lubricant deterioration.

Step 210 includes comparing the calculated maintenance threshold value to a maintenance threshold range. The data transmitted to the data processor can include direct measurements or calculated indirect measurements derived from the data. Each of these individual measurements can be used calculate the optimal life cycle of the lubricant, or can be used to determine excessive lubricant deterioration. Additionally, the system 100 can be unique to each lubricant, since each individual type of lubricant can have varying properties for their optimal life cycle and deterioration.

Step 212 includes outputting an alert when the calculated maintenance threshold value falls outside of the maintenance threshold range. In the event that an alert must be sent, the alert can be displayed on a graphical user interface, such as the dashboard.

Additionally, the method 200 can further include the steps of receiving a second set of data characterizing a second property of a lubricant within a machine from a second sensor arranged on the machine 102. The second set of data can be measured by the accelerometer 110 and can include vibrational data of the machine 102, or additional data from different types of lubricant sensors, such as viscosity or particle sensors in the lubricant flow of the machine. Additionally, the method 200 can include the step of sending an alert to an interface when a maintenance threshold value is reached. Therefore, as a maintenance threshold value is reached due to lubricant deterioration or contamination, or some form of failure, such as a leaking seal, the system 100 can generate a warning alert to inform a user of the change in conditions within the machine 102 so that the issue can be addressed before major damage occurs within the machine 102. The maintenance threshold value can be representative of a direct measurement from the sensors (e.g., lubricant temperature, lubricant viscosity) or can be a calculated value based off of many of the measured lubricant parameters, such as an optimal lubricant life cycle. The system 100 can be used with different types of lubricants to determine an optimal life cycle for each lubricant, since a change is some parameters for a first lubricant may not be an indication of lubricant deterioration, where those same parameters may indicate lubricant breakdown in another type of lubricant.

As stated above, a dashboard can be utilized so a user can observe the system 100 in operation. The dashboard can be a graphical user interface (GUI) projected onto a display, such as tablet or computer monitor, and receives its output data from the data hub 104 and the data processor 106.

In an example embodiment, the dashboard can include fleet view pages which display all the machines 102 monitored by systems 100 with a corresponding location on a map, and can display the total number of assets (ships/machines) on the map and their status. The dashboard can have four types of asset status: Normal, Alert, Alarm and Offline. A Normal Status indicates that there is no issue in the asset and everything is as expected. It can be represented in a Green color on the dashboard. An Alert Status indicates warning sign indicating that asset may have an issue that needs to be addressed, such as an indication of a future potential failure. It can be represented in a Yellow color on the dashboard. An Alarm Status is when an asset has a confirmed problem and needs immediate attention, such as a seal failure or total lubricant contamination. It can be represented in a Red color on the dashboard.

An Offline Status is when the asset is inactive. An Offline Status can be triggered due to two reasons. A Type 1 Offline Status occurs when the data hubs 104 are not able to connect to the data processor 106. On some systems 100 there could be more than one data hub 104, so it is possible to have just a portion of the hubs offline for a system 100. A Type 2 Offline Status occurs when a sensor 110, 114, 116, 118 is not communicating with a data hub 104 for some reason. If there are multiple types of sensors 110, 114, 116, 118 on a system 100 (FPS, PS, VDTD) it is possible that just one sensor could come out of communication.

The four types of asset statuses are triggered based on the parameters set for each system 100. In an example embodiment, a minimum and maximum value is set for each parameter of every asset, with the parameters being the measured and calculated values from the sensors 110, 114, 116, 118 and the data processor 106. If the parameters remain within range, the asset status for that system 100 is in normal status, and the machine 102 is operating efficiently. If the parameters go out of range while the machine 102 is in operation, then an Alert or Alarm status can be shown on the dashboard, depending on how much the parameter is outside of the maintenance threshold values. The most serious condition present can be displayed for that asset or system with priority ranking as: Alarm>Alert>Offline>Normal.

This dashboard asset status ranking would occur automatically while the system 100 is operational. For example, on the dashboard, the viscosity sensor temperature can generate an ALERT status if the temperature is above 105 °C. But if the viscosity sensor temperature further increases to 115 °C, then an ALARM status can be generated on the dashboard, indicating the increasing exceedance of the maintenance threshold value of the viscosity sensor temperature.

The dashboard can also include the complete details of the each system 100, such as its Makes/Model Name, Lubricant Brand/Type, Lubricant Last Changed, and Parameter profile details. For Parameter profiles a limit is set for each parameter on which the alert and alarm can be triggered. In an example embodiment, users can change the thresholds by changing the value in the dashboard.

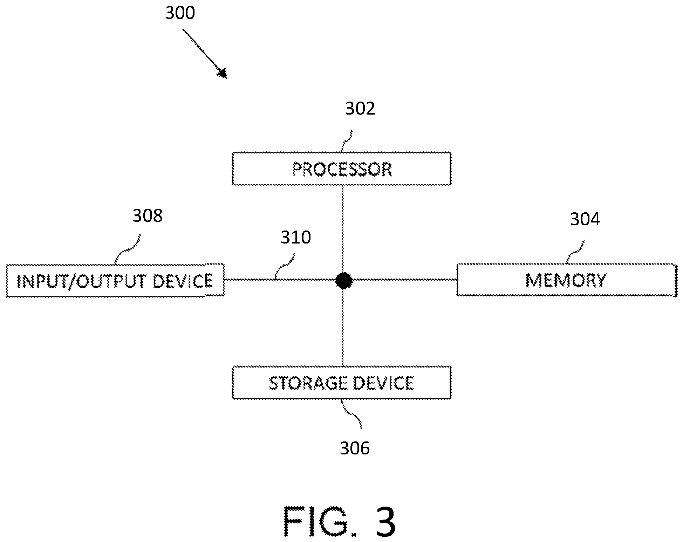

In some implementations, the current subject matter can be configured to be implemented in a system 300, as shown in FIG. 3. The system 300 can include one or more of a processor 302, a memory 304, a storage device 306, and an input/output device 308. Each of the components 302, 304, 306 and 308 can be interconnected using a system bus 310. The processor 302 can be configured to process instructions for execution within the system 300. In some implementations, the processor 302 can be a single-threaded processor. In alternate implementations, the processor 302 can be a multi-threaded processor. The processor 302 can be further configured to process instructions stored in the memory 304 or on the storage device 306, including receiving or sending information through the input/output device 308. The memory 304 can store information within the system 300. In some implementations, the memory 304 can be a computer-readable medium. In alternate implementations, the memory 304 can be a volatile memory unit. In yet some implementations, the memory 304 can be a non-volatile memory unit. The storage device 306 can be capable of providing mass storage for the system 300. In some implementations, the storage device 306 can be a computer-readable medium. In alternate implementations, the storage device 306 can be a floppy disk device, a hard disk device, an optical disk device, a tape device, non-volatile solid state memory, or any other type of storage device. The input/output device 308 can be configured to provide input/output operations for the system 300. In some implementations, the input/output device 308 can include a keyboard and/or pointing device. In alternate implementations, the input/output device 308 can include a display unit for displaying graphical user interfaces.

The present disclosure is not limited to the exemplary embodiments described herein and can be embodied in variations and modifications. The exemplary embodiments are provided merely to allow one of ordinary skill in the art to understand the scope of the present disclosure, which will be defined by the scope of the claims. Accordingly, in some embodiments, well-known operations of a process, well-known structures, and well-known technologies are not be described in detail to avoid obscure understanding of the present disclosure. Throughout the specification, same reference numerals refer to same elements.

The terminology used herein is for the purpose of describing particular embodiments only and is not intended to be limiting of the disclosure. As used herein, the singular forms "a", "an" and "the" are intended to include the plural forms as well, unless the context clearly indicates otherwise.

The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

The subject matter described herein can be implemented in analog electronic circuitry, digital electronic circuitry, and/or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processor of any kind of digital computer. Generally, a processor can receive instructions and data from a read only memory or a random access memory or both. The essential elements of a computer are a processor for executing instructions and one or more memory devices for storing instructions and data. Generally, a computer can also include, or be operatively coupled to receive data from or transfer data to, or both, one or more mass storage devices for storing data, e.g., magnetic, magneto optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (e.g., modules are not software per se). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back end component (e.g., a data server), a middleware component (e.g., an application server), or a front end component (e.g., a client computer having a graphical user interface or a web browser through which a user can interact with an implementation of the subject matter described herein), or any combination of such back end, middleware, and front end components. The components of the system can be interconnected by any form or medium of digital data communication, e.g., a communication network. Examples of communication networks include a local area network ("LAN") and a wide area network ("WAN"), e.g., the Internet.

## Claims

1. A system (100) comprising:
a plurality of sensors arranged within a lubricant flow (120) of a machine (102) and configured to measure one or more properties of a lubricant within the machine (102), wherein the plurality of sensors (114,116,118) are configured to measure at least one of impedance, temperature, or viscosity of the lubricant and/or the presence of particles within the lubricant;
a data hub (104) communicatively connected to the plurality of sensors and configured to collect and store the measured one or more properties of the lubricant from the plurality of sensors; and
a data processor (106) communicatively connected to the data hub (104) and configured to:
calculate a maintenance threshold value based on the one or more properties of the lubricant from the plurality of sensors;
compare the calculated maintenance threshold value to a maintenance threshold range; and
output an alert when the calculated maintenance threshold value falls outside of the maintenance threshold range;
**characterized by** the lubricant being a first lubricant type of a plurality of lubricant types and the data hub (104) including a plurality of algorithms to process received data, each algorithm of the plurality of algorithms corresponding to a lubricant type of the plurality of lubricant types; and
the data processor (106) being arranged to select the algorithm corresponding to the first lubricant type to calculate the maintenance threshold value including determined properties of the lubricant such as Total Acid Number (TAN), Total Base Number (TBN), % water, % salt water, % glycol, % fuel, oxidation, nitration, sulfation, % soot, viscosity, density, dielectric constant, oil temperature, particle amount, particle size and/or oil flow rate.

2. The system of claim 1, further comprising an accelerometer (110) adjacent to the machine (102) and communicatively connected to the data hub (104), wherein the accelerometer (110) is configured to measure vibrations of the machine (102).

3. The system of claim 2, wherein the maintenance threshold value is determined based on the measured properties of the lubricant and the measured vibrations of the machine (102).

4. The system of claim 1, wherein the alert is outputted to graphical user interface.

5. The system of claim 1, wherein the data processor (106) is a cloud-based system.

6. The system of claim 1, wherein the data hub (104) is communicatively connected to the central processing unit (CPU) of the machine (102) and configured to collect and store operating data of the machine from the CPU.

7. The system of claim 6, wherein the operating data of the CPU includes fuel consumption, rotations per minute, and/or oil pressure of the machine (102).

8. The system of claim 1, wherein the data hub (104) is communicatively connected to a plurality of machines, with each machine including a plurality of sensors to measure one or more properties of a lubricant within each machine.

9. The system of claim 8, wherein the plurality of machines are diesel engines.

10. A method (200), comprising:
receiving (202) a first set of data characterizing a first property of a lubricant within a machine (102) from a plurality of sensors arranged within a lubricant flow (120) of the machine (102), wherein the first set of data includes properties of the lubricant such as impedance, temperature, and/or viscosity of the lubricant and/or the presence of any particles within the lubricant;
transmitting (204) the first set of data from the plurality of sensors to a data hub (104) communicatively connected to the plurality of sensors;
transmitting (106) the first set of data from the data hub (104) to a data processor (106);
calculating (208) a maintenance threshold value based on the first property of the lubricant from the plurality of sensors;
comparing (210) the calculated maintenance threshold value to a maintenance threshold range; and
outputting (212) an alert when the calculated maintenance threshold value falls outside of the maintenance threshold range;
**characterized by** the lubricant being a first lubricant type of a plurality of lubricant types and the data hub (104) including a plurality of algorithms to process received data, each algorithm of the plurality of algorithms corresponding to a lubricant type of the plurality of lubricant types; and
the data processor (106) being arranged to select the algorithm corresponding to the first lubricant type to calculate the maintenance threshold value including determined properties of the lubricant such as Total Acid Number (TAN), Total Base Number (TBN), % water, % salt water, % glycol, % fuel, oxidation, nitration, sulfation, % soot, viscosity, density, dielectric constant, oil temperature, particle amount, particle size and/or oil flow rate.

11. The method of claim 10, further comprising receiving a second set of data characterizing a second property of a lubricant within a machine from a second sensor arranged on the machine.

## Patentansprüche

1. System (100), umfassend:
eine Vielzahl von Sensoren, die innerhalb eines Schmierstoffdurchflusses (120) einer Maschine (102) angeordnet sind und konfiguriert sind, um eine oder mehrere Eigenschaften eines Schmierstoffs innerhalb der Maschine (102) zu messen, wobei die Vielzahl von Sensoren (114, 116, 118) konfiguriert ist, um mindestens eines von Impedanz, Temperatur oder Viskosität des Schmierstoffs und/oder das Vorhandensein von Partikeln innerhalb des Schmierstoffs zu messen;
ein Datenhub (104), der mit der Vielzahl der Sensoren kommunikativ verbunden ist und konfiguriert ist, um die von den Sensoren gemessenen eine oder mehrere Eigenschaften des Schmierstoffs von der Vielzahl von Sensoren zu sammeln und zu speichern; und
ein Datenprozessor (106), der mit dem Datenhub (104) kommunikativ verbunden und konfiguriert ist zum:
Berechnen eines Wartungsschwellenwerts basierend auf der einen oder den mehreren Eigenschaften des Schmierstoffs von der Vielzahl von Sensoren;
Vergleichen des berechneten Wartungsschwellenwerts mit einem Wartungsschwellenbereich; und
Ausgeben einer Warnung, wenn der berechnete Wartungsschwellenwert außerhalb des Wartungsschwellenbereichs liegt;
**dadurch gekennzeichnet, dass** der Schmierstoff ein erster Schmierstofftyp aus einer Vielzahl von Schmierstofftypen ist und der Datenhub (104) eine Vielzahl von Algorithmen zum Verarbeiten empfangener Daten einschließt, wobei jeder Algorithmus aus der Vielzahl von Algorithmen einem Schmierstofftyp aus der Vielzahl von Schmierstofftypen entspricht; und
der Datenprozessor (106) angeordnet ist, um den Algorithmus auszuwählen, der dem ersten Schmierstofftyp entspricht, um den Wartungsschwellenwert einschließlich bestimmter Eigenschaften des Schmierstoffs zu berechnen, wie Gesamtsäurezahl (TAN), Gesamtbasenzahl (TBN), % Wasser, % Salzwasser, % Glykol, % Kraftstoff, Oxidation, Nitrierung, Sulfatierung, % Ruß, Viskosität, Dichte, Dielektrizitätskonstante, Öltemperatur, Partikelmenge, Partikelgröße und/oder Öldurchflussrate.

2. System nach Anspruch 1, ferner umfassend einen Beschleunigungsmesser (110), der an die Maschine (102) angrenzt und mit dem Datenhub (104) kommunikativ verbunden ist, wobei der Beschleunigungsmesser (110) konfiguriert ist, um Vibrationen der Maschine (102) zu messen.

3. System nach Anspruch 2, wobei der Wartungsschwellenwert basierend auf den gemessenen Eigenschaften des Schmierstoffs und den gemessenen Vibrationen der Maschine (102) bestimmt wird.

4. System nach Anspruch 1, wobei die Warnung auf einer grafischen Benutzeroberfläche ausgegeben wird.

5. System nach Anspruch 1, wobei der Datenprozessor (106) ein cloudbasiertes System ist.

6. System nach Anspruch 1, wobei der Datenhub (104) mit der Zentralverarbeitungseinheit (CPU) der Maschine (102) kommunikativ verbunden ist und konfiguriert ist, um Betriebsdaten der Maschine von der CPU zu sammeln und zu speichern.

7. System nach Anspruch 6, wobei die Betriebsdaten der CPU einen Kraftstoffverbrauch, eine Drehzahl pro Minute und/oder einen Öldruck der Maschine (102) einschließen.

8. System nach Anspruch 1, wobei der Datenhub (104) mit einer Vielzahl von Maschinen kommunikativ verbunden ist, wobei jede Maschine eine Vielzahl von Sensoren einschließt, um eine oder mehrere Eigenschaften eines Schmierstoffs innerhalb jeder Maschine zu messen.

9. System nach Anspruch 8, wobei die Vielzahl von Maschinen Dieselmotoren sind.

10. Verfahren (200), umfassend:
Empfangen (202) eines ersten Datensatzes, der eine erste Eigenschaft eines Schmierstoffs innerhalb einer Maschine (102) kennzeichnet, von einer Vielzahl von Sensoren, die innerhalb eines Schmierstoffdurchflusses (120) der Maschine (102) angeordnet sind, wobei der erste Datensatz Eigenschaften des Schmierstoffs wie Impedanz, Temperatur und/oder Viskosität des Schmierstoffs und/oder das Vorhandensein von Partikeln innerhalb des Schmierstoffs einschließt;
Übertragen (204) des ersten Datensatzes von der Vielzahl von Sensoren an einen Datenhub (104), der mit der Vielzahl von Sensoren kommunikativ verbunden ist;
Übertragen (106) des ersten Datensatzes von dem Datenhub (104) an einen Datenprozessor (106);
Berechnen (208) eines Wartungsschwellenwerts basierend auf der ersten Eigenschaft des Schmierstoffs von der Vielzahl von Sensoren;
Vergleichen (210) des berechneten Wartungsschwellenwerts mit einem Wartungsschwellenbereich; und
Ausgeben (212) einer Warnung, wenn der berechnete Wartungsschwellenwert außerhalb des Wartungsschwellenbereichs liegt;
**dadurch gekennzeichnet, dass** der Schmierstoff ein erster Schmierstofftyp aus einer Vielzahl von Schmierstofftypen ist und der Datenhub (104) eine Vielzahl von Algorithmen zum Verarbeiten empfangener Daten einschließt, wobei jeder Algorithmus aus der Vielzahl von Algorithmen einem Schmierstofftyp aus der Vielzahl von Schmierstofftypen entspricht; und
der Datenprozessor (106) angeordnet ist, um den Algorithmus auszuwählen, der dem ersten Schmierstofftyp entspricht, um den Wartungsschwellenwert einschließlich bestimmter Eigenschaften des Schmierstoffs zu berechnen, wie Gesamtsäurezahl (TAN), Gesamtbasenzahl (TBN), % Wasser, % Salzwasser, % Glykol, % Kraftstoff, Oxidation, Nitrierung, Sulfatierung, % Ruß, Viskosität, Dichte, Dielektrizitätskonstante, Öltemperatur, Partikelmenge, Partikelgröße und/oder Öldurchflussrate.

11. Verfahren nach Anspruch 10, ferner umfassend ein Empfangen eines zweiten Datensatzes, der eine zweite Eigenschaft eines Schmierstoffs innerhalb einer Maschine kennzeichnet, von einem zweiten Sensor, der an der Maschine angeordnet ist.

## Revendications

1. Système (100) comprenant :
une pluralité de capteurs agencés au sein d'un flux de lubrifiant (120) d'une machine (102) et configurés pour mesurer une ou plusieurs propriétés d'un lubrifiant au sein de la machine (102), dans lequel la pluralité de capteurs (114, 116, 118) sont configurés pour mesurer au moins l'une parmi l'impédance, la température, ou la viscosité du lubrifiant et/ou la présence de particules au sein du lubrifiant ;
une plateforme de données (104) connectée de manière communicative à la pluralité de capteurs et configurée pour collecter et stocker la ou les propriétés mesurées du lubrifiant provenant de la pluralité de capteurs ; et
un processeur de données (106) connecté de manière communicative à la plateforme de données (104) et configuré pour :
calculer une valeur de seuil de maintenance sur la base de la ou des propriétés du lubrifiant provenant de la pluralité de capteurs ;
comparer la valeur de seuil de maintenance calculée à une plage de seuils de maintenance ; et
émettre une alerte lorsque la valeur de seuil de maintenance calculée se situe en dehors de la plage de seuil de maintenance ;
**caractérisé par** le lubrifiant étant un premier type de lubrifiant d'une pluralité de types de lubrifiant et la plateforme de données (104) comportant une pluralité d'algorithmes pour traiter des données reçues, chaque algorithme de la pluralité d'algorithmes correspondant à un type de lubrifiant de la pluralité de types de lubrifiant ; et
le processeur de données (106) étant agencé pour sélectionner l'algorithme correspondant au premier type de lubrifiant pour calculer la valeur de seuil de maintenance y compris des propriétés déterminées du lubrifiant telles que l'indice d'acide total (TAN), l'indice de base total (TBN), le % d'eau, le % d'eau salée, le % de glycol, le % de carburant, l'oxydation, la nitration, la sulfatation, le % de suie, la viscosité, la densité, la constante diélectrique, la température d'huile, la quantité de particules, la taille de particules et/ou le débit de flux d'huile.

2. Système selon la revendication 1, comprenant en outre un accéléromètre (110) adjacent à la machine (102) et connecté de manière communicative à la plateforme de données (104), dans lequel l'accéléromètre (110) est configuré pour mesurer les vibrations de la machine (102).

3. Système selon la revendication 2, dans lequel la valeur de seuil de maintenance est déterminée sur la base des propriétés mesurées du lubrifiant et des vibrations mesurées de la machine (102).

4. Système selon la revendication 1, dans lequel l'alerte est émise sur une interface utilisateur graphique.

5. Système selon la revendication 1, dans lequel le processeur de données (106) est un système basé sur le cloud.

6. Système selon la revendication 1, dans lequel la plateforme de données (104) est connectée de manière communicative à l'unité centrale de traitement (CPU) de la machine (102) et configurée pour collecter et stocker des données de fonctionnement de la machine provenant de la CPU.

7. Système selon la revendication 6, dans lequel les données de fonctionnement de la CPU comportent la consommation de carburant, les tours par minute, et/ou la pression d'huile de la machine (102).

8. Système selon la revendication 1, dans lequel la plateforme de données (104) est connectée de manière communicative à une pluralité de machines, chaque machine comportant une pluralité de capteurs pour mesurer une ou plusieurs propriétés d'un lubrifiant au sein de chaque machine.

9. Système selon la revendication 8, dans lequel la pluralité de machines sont des moteurs diesel.

10. Procédé (200), comprenant :
la réception (202) d'un premier ensemble de données caractérisant une première propriété d'un lubrifiant au sein d'une machine (102) provenant d'une pluralité de capteurs agencés au sein d'un flux de lubrifiant (120) de la machine (102), dans lequel le premier ensemble de données comporte des propriétés du lubrifiant telles que l'impédance, la température, et/ou la viscosité du lubrifiant et/ou la présence de l'une quelconque particule au sein du lubrifiant ;
la transmission (204) du premier ensemble de données provenant de la pluralité de capteurs à une plateforme de données (104) connectée de manière communicative à la pluralité de capteurs ;
la transmission (106) du premier ensemble de données provenant de la plateforme de données (104) à un processeur de données (106) ;
le calcul (208) d'une valeur de seuil de maintenance sur la base de la première propriété du lubrifiant provenant de la pluralité de capteurs ;
la comparaison (210) de la valeur de seuil de maintenance calculée à une plage de seuils de maintenance ; et
l'émission (212) d'une alerte lorsque la valeur de seuil de maintenance calculée se situe en dehors de la plage de seuil de maintenance ;
**caractérisé par** le lubrifiant étant un premier type de lubrifiant d'une pluralité de types de lubrifiant et la plateforme de données (104) comportant une pluralité d'algorithmes pour traiter des données reçues, chaque algorithme de la pluralité d'algorithmes correspondant à un type de lubrifiant de la pluralité de types de lubrifiant ; et
le processeur de données (106) étant agencé pour sélectionner l'algorithme correspondant au premier type de lubrifiant pour calculer la valeur de seuil de maintenance y compris des propriétés déterminées du lubrifiant telles que l'indice d'acide total (TAN), l'indice de base total (TBN), le % d'eau, le % d'eau salée, le % de glycol, le % de carburant, l'oxydation, la nitration, la sulfatation, le % de suie, la viscosité, la densité, la constante diélectrique, la température d'huile, la quantité de particules, la taille de particules et/ou le débit de flux d'huile.

11. Procédé selon la revendication 10, comprenant en outre la réception d'un second ensemble de données caractérisant une seconde propriété d'un lubrifiant au sein d'une machine provenant d'un second capteur agencé sur la machine.
